Europäisches Patentamt

(19) European Patent Office

Office européen des brevets

(11) Publication number : **0 361 653 B1**

(12) **EUROPEAN PATENT SPECIFICATION**

(45) Date of publication of patent specification :
21.04.93 Bulletin 93/16

(51) Int. Cl.⁵ : **G02F 1/33**

(21) Application number : **89307502.8**

(22) Date of filing : **24.07.89**

(54) **Optical scanning system.**

(30) Priority : **19.08.88 GB 8819719**

(43) Date of publication of application :
**04.04.90 Bulletin 90/14**

(45) Publication of the grant of the patent :
**21.04.93 Bulletin 93/16**

(84) Designated Contracting States :
**CH DE FR GB IT LI NL**

(56) References cited :
**US-A- 3 531 184
JAPANESE JOURNAL OF APPLIED PHYSICS,
vol. 27, March 1988, Supplement 27-1, Proceedings of 8th Symposium on Ultrasonic Electronics, Tokyo, 8th-10th December 1987, pages 139-141; H. URABE et al.: "A leaky rayleigh wave device for two-dimensional optical deflection"**

(56) References cited :
**JAPANESE JOURNAL OF APPLIED PHYSICS,
vol. 26, no. 7, July 1987, pages 1026-1030; S. HOSAKA et al.: "High speed laser beam scanning using an acousto-optical deflector (AOD)"
Jap. Journal of Appl. Phys., 9, (1970), 155-156**

(73) Proprietor : **BRITISH AEROSPACE PUBLIC LIMITED COMPANY
Warwick House, P.O. Box 87, Farnborough Aerospace Centre
Farnborough, Hants. GU14 6YU (GB)**

(72) Inventor : **Workman, John British Aerospace Public Ltd. Comp.
Sowerby Research Centre PO Box 5
Filton Bristol BS12 7QW (GB)**

(74) Representative : **Rooney, Paul Blaise et al
British Aerospace plc, Corporate Intellectual Property Department, Park East, PO Box 87, Farnborough Aerospace Centre
Farnborough, Hants GU14 6YU (GB)**

EP 0 361 653 B1

Jouve, 18, rue Saint-Denis, 75001 PARIS

## Description

This invention relates to a process for producing a scan pattern from a beam of electromagnetic radiation, and concerns, particularly, but not exclusively, an acousto-optic scanning process, such as a twin axis acousto-optic process.

It has previously been described, in, for example, Patent No. GB 2133652B, the way in which a Laser information field (Lif) guidance system provides a means by which projectiles can measure their position within a given region by timing a series of laser pulses, with the projectile being completely independent of the Lif generator apart from reception of pulses from it. However there is a problem with acousto-optic lensing of the Lif projector, which results in broadened pulses and reduced pulse heights.

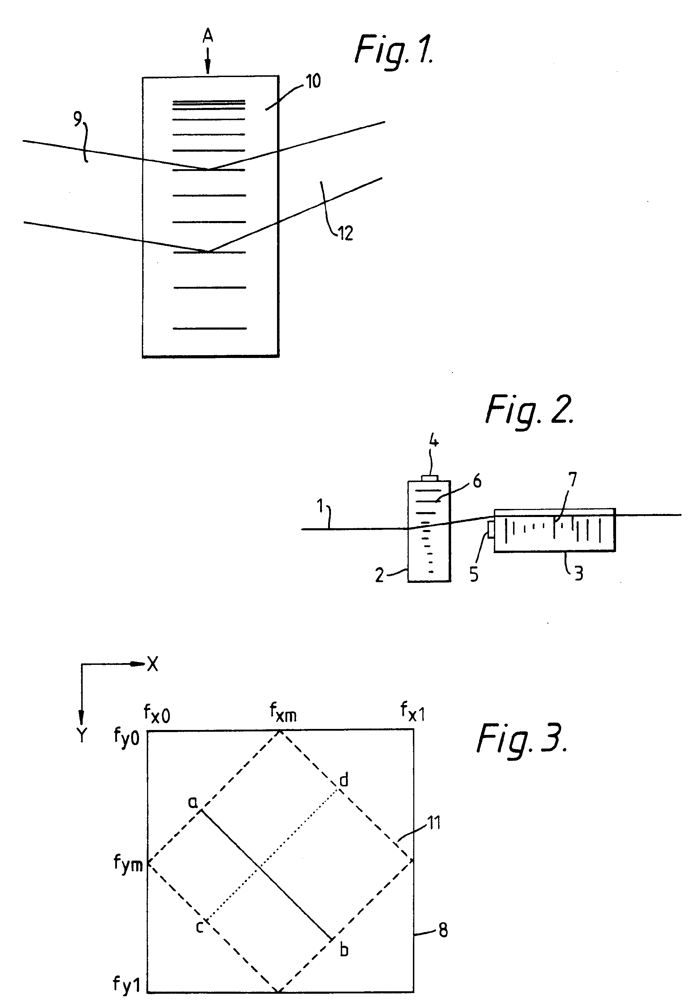

Essentially acoustic lensing is the result of the interaction of a finite laser beam 9 with an acoustic column 10 whose acoustic wave moving in the direction A is varying in frequency as illustrated in the accompanying Figure 1. This means that different parts of the beam 9 experience different deflections 12, so that, for example, a parallel input beam 9 becomes a convergent output beam 12. The net result is equivalent to placing a cylindrical lens in the beam 9. The effective focal length $F_{eff}$ of this lens is given by:

$$F_{eff} = \frac{v^2}{\lambda \; df/dt} \quad \ldots \ldots \ldots (1)$$

where V is the acoustic velocity, $\lambda$ is the wavelength and df/dt is the rate of change of frequency.

In a single axis system as shown in Figure 1 the above described lensing effect can be corrected by the introduction of a cylindrical lens of equal and opposite focal length as $F_{eff}$ in the output beam 12. However, in a twin axis system the introduction of such a lens would improve the performance in one direction but exacerbate the problem in the orthogonal direction.

There is thus a need for an improved scan pattern producing process in which the lensing effect in both orthogonal directions is minimised.

According to one aspect of the present invention, there is provided a process for producing a scan pattern from a beam of electromagnetic radiation, characterised by deflecting the beam with acousto-optic means in first and second directions and simultaneously scanning the beam in third and fourth directions which are inclined angularly relative to the first and second directions.

Preferably the first and second directions are orthogonal and the third and fourth directions are orthogonal.

Conveniently third and fourth directions are inclined at substantially 45° to the first and second directions.

Advantageously the beam is scanned in said third and fourth directions by simultaneously operation of two acousto-optic deflectors, or alternatively by a single crystal and means for propagating acoustic waves in said third and fourth directions in the crystal.

For a better understanding of the present invention, and to show how the same may be carried into effect, reference will now be made, by way of example, to the accompanying drawings, in which:-

Figure 1 is a diagram illustrating conventional acousto-optic lensing,

Figure 2 is a diagrammatic illustration of a scanning process of the invention showing how a scan pattern may be achieved; and

Figure 3 shows diagrammatically a scan pattern achievable by a scanning process according to the present invention.

Referring first to Figure 2 of the accompanying drawings, in a scan pattern producing process of the invention, a laser beam 1 is produced, in any known manner, and passed through acousto-optic means in the form of two acousto-optic deflectors 2 and 3 each including an acousto-optic transducer, 4 and 5 respectively. Transducer 4 produces acoustic waves 6, of variable frequency, in one direction (say X) thereby causing deflection of the beam 1 in the X-direction. Similarly, transducer 5 produces acoustic waves 7, also of variable frequency, in a second orthogonal direction (say Y), thereby causing deflection of the beam in the Y-direction.

The combined use of deflectors 2 and 3 can result, for example, in a line scan pattern being produced. The outline 8 of this pattern is shown in Figure 3. A problem, however exists in the process namely acoustic lensing. This is caused by the interaction between a laser beam 9 and an acoustic column 10, as shown in Figure 1. The laser beam 9 is deflected by different angles in different parts of the column 10, in a similar way to placing a cylindrical lens in the beam.

In a single axis process the above described lensing effect can be corrected by the introduction of an equivalent, but opposite cylindrical lens. However in a twin axis process the introduction of such a lens would improve the performance in one direction, say X, but exacerbate the problem in the orthogonal direction, Y.

The effects of acoustic lensing are overcome with the scanning process of the invention as shown in Figures 2 and 3. The field of the acoustic waves 7 is rotated through substantially 45° with respect to the X and Y deflector axes and line scans are produced by rapid scanning of both X and Y deflectors 2, 3 simultaneously. In order to utilise the same frequency regime, the extent of the field is reduced by a factor of $1/\sqrt{2}$. This factor which may be compensated for by changing the output telescope and possibly the input divergence of the laser producing the beam 1. The new field is shown at 11 in Figure 3.

In order to produce a line scan from point a to point b as shown in Figure 3, both deflectors 2,3 must be scanned in frequency from $f_{xa}$ to $f_{xb}$ and $f_{ya}$ to $f_{yb}$ respectively. These frequencies are given by the relationships:-

$$f_{xa} = f_{xm} - \frac{f}{N-1}(n-1) \quad (2)$$

$$f_{xb} = f_{x1} - \frac{f}{N-1}(n-1) \quad (3)$$

$$f_{ya} = f_{yo} - \frac{f}{N-1}(n-1) \quad (4)$$

$$f_{yb} = f_{ym} - \frac{f}{N-1}(n-1) \quad (5)$$

where $f_{x0}$ and $f_{x1}$ are the lower and upper frequency limits of the x deflector; $f_{y0}$ and $f_{ym}$ are the centre frequencies of the x and y scans; $2 f$ = the frequency range; N is the total number of scan lines; and, n is the number of the line being scanned ($1 \leqq n \leqq N$).

Similarly an orthogonal scan can be produced by scanning the deflector frequencies between different frequency limits. For example for scanning from c to d in Figure 3 the limits would be given by:-

$$f_{xc} = f_{xo} = \frac{f}{N-1}(m-1) \quad (6)$$

$$f_{xd} = f_{xm} = \frac{f}{N-1}(m-1) \quad (7)$$

$$f_{yc} = f_{ym} = \frac{f}{N-1}(m-1) \quad (8)$$

$$f_{yd} = f_{yo} = \frac{f}{N-1}(m-1) \quad (9)$$

where m is the line number.

The result of driving the acousto-optic means in this fashion is that the X and Y deflectors 2,3 act as a simultaneous pair of cylindrical lenses irrespective of which of the two orthogonal scans is taking place. This is virtually equivalent to each acoustic-optic means deflector acting as a spherical lens, thus making it possible to correct the lensing effect, in a manner similar to introducing a single spherical lens into a single axis system as shown in Figure 1.

With the deflector configuration of the process of the present invention the X and Y deflections are produced by offset acoustic columns as can be seen from Figure 2. In other words the Y deflector is positioned so as to receive deflected radiation from deflector 2. This will mean that the degree of lens correction effect is different in both axes. This fact becomes apparent from a consideration of the lens combination formula for two lenses:-

$$\frac{1}{f_{eff}} = \frac{1}{f_1} + \frac{1}{f_2} - \frac{d}{f_1 f_2} \quad (10)$$

where $f_{eff}$ is the combination focal length; $f_1$, $f_2$ are the focal lengths of the two lenses and d is their separation.

In the present case $f_1 = -f_2 = f$ say. Hence:-

$$f_{eff} = \frac{f^2}{d} \quad (11)$$

With a reduced frequency scan (see Figure 3) f = 42.6. Assuming a 1cm offset between the acoustic columns forming to deflectors 2, 3 and values of 3 and 4cm in the two orthogonal axes, gives values of 605cm and 454cm for $f_{eff}$ in these axes.

Alternatively by using a single crystal deflector instead of the two deflectors 2,3 with means for propagating acoustic waves in different directions in the crystal, the variation between axes could be reduced if not removed completely as the acoustic columns are much more nearly coincident. However, although the field centre remains fixed by the proposed 45° rotation, the reference axes are now different. Any problem arising as a result of this may be dealt with by optically rotating the entire field.

Although this invention is proposed, for example, with Lif in mind, i.e. where it is necessary to provide a fast twin axes acousto-optic scanning process, this invention could have applications in any area where orthogonal scanning is required. For example television type systems are one possible application. For such systems higher resolution and possibly higher scan rates may well be desirable and are achievable using the scanning process of the invention.

## Claims

1. A process for producing a scan pattern from a beam (1) of electromagnetic radiation, characterised by deflecting the beam (1) with acousto-optic means (2,3) in first and second directions and simultaneously scanning the beam (1) in third and fourth directions which are inclined angularly relative to the first and second directions.

2. A process according to claim 1, wherein the first and second directions are orthogonal and wherein the third and fourth directions are orthogonal.

3. A process according to claim 1 or claim 2, wherein the third and fourth directions are inclined at substantially 45° to the first and second directions.

4. A process according to any one of claims 1 to 3, in which the beam (1) is scanned in said third and fourth directions by simultaneous operation of two acousto-optic deflectors (2,3) forming part of said acousto-optic means.

5. A process according to claim 4, in which an acoustic column of acoustic waves (6, 7) of variable frequency is created in one direction in each deflector (2, 3) by an associated transducer (4, 5).

6. A process according to claim 5, in which the acoustic waves (6) of the deflector (2) are propagated in a direction orthogonal to the direction of propagation of the acoustic waves (7) of the deflector (3).

7. A process according to any one of claims 1,2 or 3, in which the acousto-optic means utilised comprises a single crystal and means for propagating acoustic waves in said third and fourth directions in the crystal.

**Patentansprüche**

1. Verfahren zur Erzeugung eines Abtastmusters von einem Strahl (1) elektromagnetischer Strahlung, dadurch gekennzeichnet, daß der Strahl (1) mit einer akusto-optischen Vorrichtung (2, 3) in einer ersten und einer zweiten Richtung abgelenkt wird und daß gleichzeitig der Strahl (1) in einer dritten und einer vierten Richtung abgelenkt wird, die im Winkel relativ zu der ersten und der zweiten Richtung geneigt sind.

2. Verfahren nach Anspruch 1, bei welchem die erste und die zweite Richtung senkrecht aufeinander stehen und die dritte und die vierte Richtung senkrecht aufeinander stehen.

3. Verfahren nach Anspruch 1 oder 2, bei welchem die dritte und die vierte Richtung unter im wesentlichen 45° gegenüber der ersten und der zweiten Richtung angestellt sind.

4. Verfahren nach Ansprüche 1 bis 3, bei welchem der Strahl (1) in der dritten und der vierten Richtung durch gleichzeitige Betätigung von zwei akusto-optischen Deflektoren (2, 3) abgelenkt wird, die einen Teil der akusto-optischen Vorrichtung bilden.

5. Verfahren nach Anspruch 4, bei welchem eine Schallsäule mit Schallwellen (6, 7) variabler Frequenz in einer Richtung in jedem Deflektor (2, 3) durch einen zugeordneten Wandler (4, 5) erzeugt wird.

6. Verfahren nach Anspruch 5, bei welchem die Schallwellen (6) des Deflektors (2) in einer Richtung senkrecht zur Ausbreitungsrichtung der Schallwellen (7) des Deflektors (3) fortschreiten.

7. Verfahren nach einem der Ansprüche 1, 2 oder 3, bei welchem die benutzte akusto-optischen Vorrichtung ein einziges Kristall und Mittel aufweist, um die Schallwellen in der dritten und der vierten Richtung im Kristall auszubreiten.

**Revendications**

1. Procédé pour produire un diagramme de balayage à partir d'un faisceau (1) de rayonnement électromagnétique, caractérisé par la déviation du faisceau (1) avec un moyen acousto-optique (2,3) dans des première et seconde directions et par le balayage simultané du faisceau (1) dans des troisième et quatrième directions qui sont angulairement inclinées par rapport aux première et seconde directions.

2. Procédé selon la revendication 1, dans lequel les première et seconde directions sont orthogonales et dans lequel les troisième et quatrième directions sont orthogonales.

3. Procédé selon la revendication 1 ou la revendication 2, dans lequel les troisième et quatrième directions sont inclinées à sensiblement 45° par rapport aux première et seconde directions.

4. Procédé selon l'une quelconque des revendications 1 à 3, dans lequel le faisceau (1) est balayé dans lesdites troisième et quatrième directions par le fonctionnement simultané de deux déflecteurs acousto-optiques (2,3) faisant partie dudit moyen acousto-optique.

5. Procédé selon la revendication 4, dans lequel une colonne acoustique d'ondes acoustiques (6, 7) de fréquence variable est créée dans une direction dans chaque déflecteur (2, 3) par un transducteur associé (4, 5).

6. Procédé selon la revendication 5, dans lequel les ondes acoustiques (6) du déflecteur (2) se propagent dans une direction perpendiculaire au sens de propagation des ondes acoustiques (7) du déflecteur (3).

7. procédé selon l'une quelconque des revendications 1, 2 ou 3, dans lequel le moyen acousto-optique utilisé comprend un seul cristal et un moyen pour propager les ondes acoustiques dans lesdites troisième et quatrième directions dans le cristal.

Fig.1.

Fig. 2.

Fig.3.